# EUROPEAN PATENT APPLICATION

(11) **EP 2 568 726 A1**
(43) Date of publication of application: **13.03.2013**
(21) Application number: 11814018.5
(22) Date of filing: 27.01.2011
(51) Int. Cl.: H04W 4/06, H04W 12/06

(54) **MANAGEMENT METHOD FOR AUTHENTICATION PARAMETERS AND TERMINAL**

(30) Priority: 06.08.2010 CN 201010250434
(71) Applicant: ZTE Corporation, Shenzhen, Guangdong 518057 (CN)
(72) Inventor: SONG, Yulin, Shenzhen Guangdong 518057 (CN)
(74) Representative: Nilsson, Lars-Magnus
(86) International application number: PCT/CN2011/070712
(87) International publication number: WO 2012/016434

(57) **Abstract**

The disclosure discloses a terminal, which includes: a user verification module configured to generate a second authentication parameter; an authentication control module configured to generate a first authentication parameter, acquire the second authentication parameter from the user verification module, locally store and send the first authentication parameter, the second authentication parameter and a third authentication parameter acquired by a service processing module to an authentication parameter module, and when receiving an authentication parameter acquisition request sent by the service processing module, perform verification on the authentication parameters; the authentication parameter module configured to back up the first authentication parameter, the second authentication parameter and the third authentication parameter; and the service processing module configured to acquire the third authentication parameter and send the authentication parameter acquisition request to the authentication control module. The disclosure further provides a method for managing authentication parameters. By means of the technical solution of the disclosure, an accuracy ratio of authentication parameters in an authentication process of mobile TV business can be improved.

## Description

### TECHNICAL FIELD

The disclosure relates to a Mobile Broadcast Business Management System (MBBMS), and in particular relates to a method and terminal for managing authentication parameters.

### BACKGROUND

An MBBMS provides downlink transmission of multimedia contents by using a broadcast network of a broadcast television operator, completes authorization, authentication and management of a terminal by using an authentication system of a mobile communication network, a two-way channel of the network and a user management system of the broadcast television operator, and realizes related interaction functions by using the two-way channel of the mobile network. In a related art, the MBBMS can support two types of services in mobile multimedia broadcast or mobile TV service, which are a radio and TV program service and an interactive service based on the radio TV program service, wherein the radio and TV program service refers to continuously broadcasted TV programs which are provided by radio and TV broadcasting agencies.

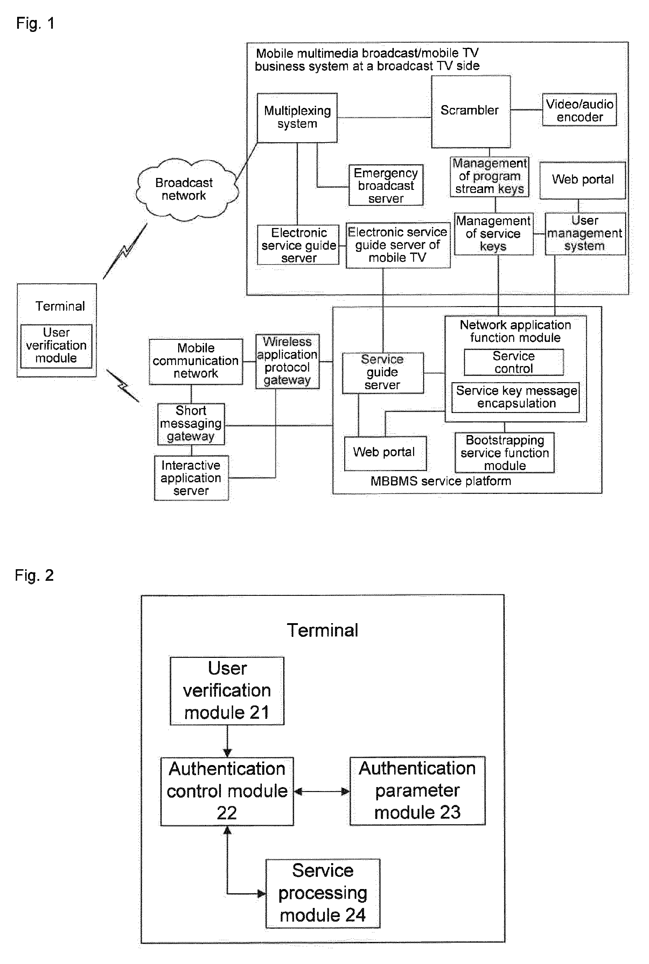

Fig. 1 shows a structure diagram of an MBBMS according to a related art; as shown in Fig. 1, an MBBMS service platform is mainly for completing distribution of service guides, management of user subscription, management of user keys, user authentication, charging and other functions; a terminal is mainly for completing reception and presentation of mobile multimedia broadcast/mobile TV business, and cooperating with the MBBMS service platform to complete the user authentication, the management of subscription and the management of keys; wherein, a user verification module of the terminal is a core module for performing authentication and key management at the terminal side, and is mainly configured to generate, store and decrypt keys; a mobile multimedia broadcast/mobile TV business system at a broadcast TV side is mainly used for encoding of audio and video, encryption of program streams, configuration of service information, multiplexing and transmission of broadcast signals, storage of user subscription information, management of broadcast TV user keys, management of service keys and the like.

In the related art, the terminal and the MBBMS service platform need authentication when performing service interaction, wherein the service interaction can be service starting, service subscription, service playing and the like of a mobile TV; and authentication in the MBBMS is realized by encrypting a program stream and then sending a decryption key of the program stream to a user, wherein all keys transmitted in a network are encrypted for ensuring security of keys in a transmission process. Management of keys in the related art adopts a 4-stratum architecture; authentication management and user initialization registration are performed in the first stratum, that is, a Generic Bootstrapping Architecture (GBA) is performed between the terminal and the MBBMS service platform, wherein the GBA is a process that the terminal and the MBBMS negotiate to generate a set of shared keys; according to the shared keys, the user verification module of the terminal and the MBBMS service platform respectively generate an MBMS Request Key (MRK) and an MBMS User Key (MUK) of a Multimedia Broadcast/Multicast Service (MBMS); wherein the MRK is used for verification of the terminal and the MBBMS service platform, and the MUK is used for the MBBMS service platform to encrypt a service key during transmission of the service key; the MUK is instantly generated based on a shared key negotiated by the user verification module of the terminal and the MBBMS service platform through the GBA; user keys at a broadcast TV side are stored in the user verification module of the terminal and the mobile multimedia broadcast/mobile TV service system at the broadcast TV side. Management of a service key is performed in the second stratum, that is, the MBBMS service platform transmits the service key to a terminal by encryption based on the user subscription; and the mobile multimedia broadcast/mobile TV service system at the broadcast TV side encrypts the service key by using a user key stored by the mobile multimedia broadcast/mobile TV business system itself; the MBBMS service platform obtains, from the mobile multimedia broadcast/mobile TV business system at the broadcast TV side, the service key which is encrypted by using the user key at the broadcast TV side, and then uses the MUK at the MBBMS service platform side to encrypt the service key, similarly, when decrypting the encrypted service key, the user verification module of the terminal uses both the MUK and the user key at the broadcast TV side stored in the user verification module itself successively to perform decryption. Management of a program stream key is performed in the third stratum, that is, the mobile multimedia broadcast/mobile TV business system at the broadcast TV side broadcasts the encrypted program stream key in a broadcast network; the mobile multimedia broadcast/mobile TV business system at the broadcast TV side will use the service key when encrypting the program stream key; and the user verification module of the terminal will use the decrypted service key to decrypt the encrypted program stream key. Management of a program stream is performed in the fourth stratum, that is, the mobile multimedia broadcast/mobile TV business system at the broadcast TV side uses a program stream key to encrypt the program stream, the encrypted program stream is distributed through a broadcast channel, and the terminal uses the decrypted program stream key to decrypt the program stream.

According to an actual situation of authentication in the related art, an authentication failure is caused by inconsistence of authentication parameters obtained by the terminal and the MBBMS service platform through their respective calculation, wherein the authentication parameters are data used when the terminal and the MBBMS service platform perform authentication, and can be parameters of multiple types, such as a user name, a domain name, a random number or the like; and the main reason for the inconsistence is that the authentication parameters are wrong at the terminal side due to exception of an operation process, which causes the authentication failure, so that service interaction fails and user experience is influenced.

### SUMMARY

In view of the problem above, the main purpose of the disclosure is to provide a method and a terminal for managing authentication parameters, for improving an accuracy ratio of authentication parameters in an authentication process of mobile TV business.

For achieving the above purpose, the following technical solutions are provided.

The disclosure provides a terminal, which includes a user verification module, an authentication control module, an authentication parameter module and a service processing module, wherein

the user verification module is configured to generate a second authentication parameter;

the authentication control module is configured to generate a first authentication parameter, acquire the second authentication parameter from the user verification module, locally store and send the first authentication parameter, the second authentication parameter and a third authentication parameter acquired by the service processing module to the authentication parameter module, and when receiving an authentication parameter acquisition request from the service processing module, perform verification on the authentication parameters;

the authentication parameter module is configured to back up the first authentication parameter, the second authentication parameter and the third authentication parameter; and

the service processing module is configured to acquire the third authentication parameter, and send the authentication parameter acquisition request to the authentication control module.

In the terminal,

the authentication control module may be further configured to, when all of the authentication parameters pass the verification, send, through the service processing module, the authentication parameters and an authentication parameter combination generated according to the authentication parameters to a Mobile Broadcast Business Management System (MBBMS) service platform.

In the terminal,

the authentication control module may be further configured to, when an authentication parameter does not pass the verification, send a failure response to the service processing module; and

the service processing module may be further configured to, when receiving the failure response from the authentication control module, stop an authentication process of mobile TV business.

The disclosure further provides a method for managing authentication parameters, which includes:

an authentication control module generates a first authentication parameter, locally stores and sends the first authentication parameter to an authentication parameter module to back up; an authentication control module acquires a second authentication parameter from a user verification module, locally stores and sends the second authentication parameter to the authentication parameter module to back up; the authentication control module stores a third authentication parameter acquired by a service processing module; and the authentication parameter module backs up the third authentication parameter; and

when receiving an authentication parameter acquisition request from the service processing module, the authentication control module performs verification on the authentication parameters.

Before the authentication control module stores the third authentication parameter acquired by the service processing module, and the authentication parameter module backs up the third authentication parameter, the method may further include:

the service processing module acquires the third authentication parameter from a Mobile Broadcast Business Management System (MBBMS) service platform.

In the method,

when all of the authentication parameters pass the verification, the authentication control module sends, through the service processing module, the authentication parameters and an authentication parameter combination generated according to the authentication parameters to the MBBMS service platform; and the MBBMS service platform authenticates mobile TV business by using the authentication parameters.

The method may further include:

when an authentication parameter does not pass the verification, the authentication control module sends a failure response to the service processing module; and then the service processing module stops an authentication process of mobile TV business.

In the method, that the authentication control module performs verification on the authentication parameters may include:

the service processing module sends the authentication parameter acquisition request to the authentication control module; the authentication control module sends an request for acquiring the first authentication parameter to the authentication parameter module; the authentication parameter module sends the first authentication parameter to the authentication control module; and the authentication control module acquires the first authentication parameter, the second authentication parameter and the third authentication parameter in sequence from the authentication parameter module, and verifies the authentication parameters.

In the method, that the authentication control module sends the authentication parameters and the authentication parameter combination generated according to the authentication parameters to the MBBMS service platform through the service processing module may include:

the authentication control module generates the authentication parameter combination by using an encryption algorithm according to the first authentication parameter, the second authentication parameter and the third authentication parameter; and the authentication control module sends the first authentication parameter, the second authentication parameter, the third authentication parameter and the authentication parameter combination which pass the verification to the MBBMS service platform through the service processing module.

In the method, that the MBBMS service platform authenticates mobile TV business by using the authentication parameters may include:

the MBBMS service platform compares the received authentication parameters and the authentication parameter combination with authentication parameters pre-stored by the MBBMS service platform and an authentication parameter combination generated by the MBBMS service platform, respectively; the MBBMS service platform sends an authentication result to the service processing module of a terminal by using a message; and a screen of the terminal displays the authentication result.

By means of the method and the terminal for managing authentication parameters provided by the disclosure, the authentication control module performs unified management on authentication parameters and verifies the authentication parameters, so that the accuracy of the authentication parameters is ensured, further, incorrect authentication parameters are prevented from being sent to the MBBMS service platform to verify, useless interaction between the terminal and the MBBMS service platform is reduced, terminal resources are saved, and data disorder caused by frequent operations of the terminal is avoided, thereby the stable operation and the accuracy of the terminal are ensured; in addition, the authentication parameters sent to the MBBMS service platform from the terminal are correct, therefore, the success ratio of authentication of mobile TV business is improved.

### BRIEF DESCRIPTION OF THE DRAWINGS

Fig. 1 shows a structure diagram of an MBBMS according to a related art;

Fig. 2 shows a structure diagram of a terminal for managing authentication parameters according to the disclosure; and

Fig. 3 shows a flowchart of a method for managing authentication parameters according to the disclosure.

### DETAILED DESCRIPTION

The main idea of the disclosure is: a user verification module generates a second authentication parameter; an authentication control module generates a first authentication parameter, acquires the second authentication parameter from the user verification module, locally stores and sends the first authentication parameter, the second authentication parameter and a third authentication parameter acquired by a service processing module to an authentication parameter module; when receiving an authentication parameter acquisition request sent by the service processing module, the authentication control module verifies the authentication parameters; the authentication parameter module backs up the first authentication parameter, the second authentication parameter and the third authentication parameter; and the service processing module acquires the third authentication parameter, and sends the authentication parameter acquisition request to the authentication control module.

The disclosure will be described in detail with reference to the accompanying drawings and embodiments hereinafter.

The disclosure provides a terminal for managing authentication parameters, and Fig. 2 shows a structure diagram of the terminal for managing authentication parameters according to the disclosure; as shown in Fig. 2, the terminal includes: a user verification module 21, an authentication control module 22, an authentication parameter module 23 and a service processing module 24, wherein

the user verification module 21 is configured to generate a second authentication parameter;

the authentication control module 22 is configured to generate a first authentication parameter, acquire the second authentication parameter from the user verification module 21, locally store and send the first authentication parameter, the second authentication parameter and a third authentication parameter acquired by the service processing module 24 to the authentication parameter module 23, and when receiving an authentication parameter acquisition request sent by the service processing module 24, perform verification on the authentication parameters;

the authentication parameter module 23 is configured to back up the first authentication parameter, the second authentication parameter and the third authentication parameter; and

the service processing module 24 is configured to acquire the third authentication parameter, and send the authentication parameter acquisition request to the authentication control module 22.

The authentication control module 22 is further configured to, when all of the authentication parameters pass the verification, send, through the service processing module 24, the authentication parameters and an authentication parameter combination generated according to the authentication parameters to an MBBMS service platform.

The authentication control module 22 is further configured to, when an authentication parameter does not pass the verification, send a failure response to the service processing module 24; and

the service processing module 24 is further configured to, when receiving the failure response sent by the authentication control module 22, stop an authentication process of mobile TV business.

That the authentication control module 22 performs verification on the authentication parameters includes:

the service processing module 24 sends the authentication parameter acquisition request to the authentication control module 22; the authentication control module 22 sends an request for acquiring the first authentication parameter to the authentication parameter module 23; the authentication parameter module 23 sends the first authentication parameter to the authentication control module 22; and the authentication control module 22 acquires the first authentication parameter, the second authentication parameter and the third authentication parameter in sequence from the authentication parameter module, and verifies the authentication parameters.

That the authentication control module 22 sends the authentication parameters and an authentication parameter combination generated according to the authentication parameters to the MBBMS service platform through the service processing module 24 includes:

the authentication control module 22 generates the authentication parameter combination by using an encryption algorithm according to the first authentication parameter, the second authentication parameter and the third authentication parameter; and the authentication control module 22 sends the first authentication parameter, the second authentication parameter, the third authentication parameter and the authentication parameter combination which pass the verification to the MBBMS service platform through the service processing module 24.

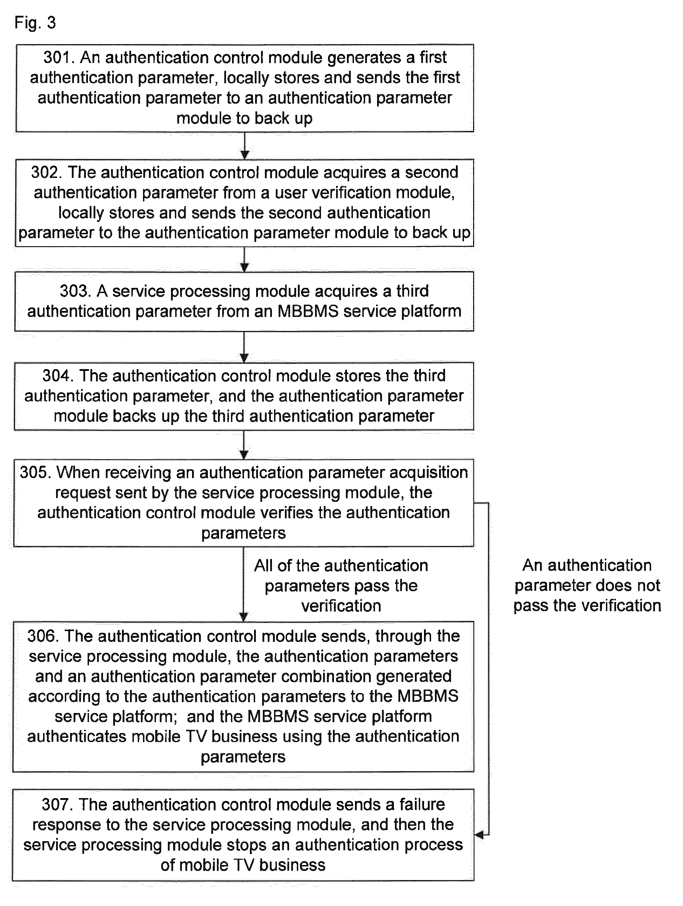

Based on the above terminal, the disclosure further provides a method for managing authentication parameters, and Fig. 3 shows a flowchart of the method for managing authentication parameters according to the disclosure; as shown in Fig. 3, the method includes the following steps.

Step 301: an authentication control module generates a first authentication parameter, locally stores and sends the first authentication parameter to an authentication parameter module to back up;

specifically, the authentication control module of a terminal may randomly generate the first authentication parameter, or generate the first authentication parameter by using an algorithm, and sends the first authentication parameter, after locally storing the first authentication parameter, to the authentication parameter module of the terminal to back up; at the same time, the authentication control module sends the first authentication parameter to an MBBMS service platform through a service processing module for authenticating mobile TV business; wherein the authentication control module and the authentication parameter module can either store the authentication parameters after writing the authentication parameters into a file, or store the authentication parameters in a memory of the terminal.

Step 302: an authentication control module acquires a second authentication parameter from a user verification module, locally stores and sends the second authentication parameter to the authentication parameter module to back up;

specifically, the authentication control module of the terminal sends an authentication parameter acquisition request to the user verification module of the terminal; after receiving the authentication parameter acquisition request, the user verification module sends its own second authentication parameter to the authentication control module; after receiving the second authentication parameter, the authentication control module locally stores and sends the second authentication parameter to the authentication parameter module to back up; wherein the second authentication parameter of the user verification module is a character string which is generated by the user verification module by using an algorithm according to a shared key generated in a Generic Bootstrapping Architecture (GBA) process.

Step 303: a service processing module acquires a third authentication parameter from an MBBMS service platform;

specifically, when a user uses mobile TV business, it is necessary to authenticate the mobile TV business; the service processing module of the terminal sends an authentication request to the MBBMS service platform, and after receiving the authentication request, the MBBMS service platform sends its own third authentication parameter to the service processing module; here, the third authentication parameter of the MBBMS service platform can be either its own domain name or a randomly generated random number.

Step 304: the authentication control module stores the third authentication parameter, and the authentication parameter module backs up the third authentication parameter;

specifically, the service processing module sends the third authentication parameter acquired from the MBBMS service platform to the authentication control module; and the authentication control module stores the received third authentication parameter and forwards the third authentication parameter to the authentication parameter module to back up.

When the authentication parameter module stores the received authentication parameters, if software or hardware in the terminal goes wrong, then the authentication parameters cannot be stored successfully; when the situation that the authentication parameters cannot be stored successfully occurs, the authentication parameter module sends a message indicative of exception to the service processing module through the authentication control module; after receiving the message indicative of exception, the service processing module triggers the GBA process, that is, the service processing module re-generates a shared key, and finally obtains a new authentication parameter according to the newly generated shared key; in this way, invalidation of the subsequent authentication process can be effectively avoided, because when the terminal goes wrong at the moment, even though the subsequent authentication process is performed, an authentication failure may occur; if the GBA process is triggered in time, the authentication parameters are updated in time, then the time consumed by a failed authentication flow of mobile TV business is saved; after the service processing module triggers the GBA process, the authentication control module and the authentication parameter module will receive a message and then delete the previously stored authentication parameters to provide a storage space for storing the new authentication parameters; and the MBBMS service platform will also update the authentication parameters stored by the MBBMS service platform itself.

If a Subscriber Identity Module (SIM) card of a mobile terminal is frequently replaced, the authentication control module and the authentication parameter module of the mobile terminal may also store multiple groups of authentication parameters according to International Mobile Subscriber Identification Numbers (IMSIs) of different SIM cards.

Step 305: when receiving an authentication parameter acquisition request sent by the service processing module, the authentication control module verifies the authentication parameters; when all of the authentication parameters pass the verification, Step 306 is executed; when an authentication parameter does not pass the verification, Step 307 is executed;

specifically, the service processing module of the terminal sends the authentication parameter acquisition request to the authentication control module; after receiving the authentication parameter acquisition request, the authentication control module sends a request for acquiring the first authentication parameter to the authentication parameter module; after receiving the request for acquiring the first authentication parameter, the authentication parameter module sends the first authentication parameter to the authentication control module; the authentication control module compares the acquired first authentication parameter with the locally stored first authentication parameter; if the two first authentication parameters are consistent, then the first authentication parameter pass the verification, similarly, the authentication control module acquires and verifies the second authentication parameter in the same way; if the two first authentication parameters are inconsistent, Step 307 is executed;

the authentication control module acquires the first authentication parameter, the second authentication parameter and the third authentication parameter in sequence from the authentication parameter module, and verifies the authentication parameters; as long as the situation that the acquired authentication parameter and the locally stored authentication parameter are inconsistent occurs, the authentication control module stops acquiring the authentication parameters, and Step 307 is executed; after all of the three authentication parameters pass the verification, Step 306 is executed.

If the authentication control module and the authentication parameter module store the authentication parameters according to the IMSI of the SIM card, when the service processing module sends the authentication parameter acquisition request to the authentication control module, the authentication parameter acquisition request includes the IMSI of the currently used SIM card of the mobile terminal; after receiving the authentication parameter acquisition request, the authentication control module sends the request for acquiring the first authentication parameter to the authentication parameter module, wherein the request for acquiring the first authentication parameter also includes the IMSI of the currently used SIM card of the mobile terminal, and the authentication parameter module finds, according to the IMSI, the first authentication parameter corresponding to the IMSI in multiple authentication parameters stored by the authentication parameter module itself; similarly, the authentication control module finds, according to the IMSI, the first authentication parameter corresponding to the IMSI in multiple authentication parameters stored by the authentication parameter module itself; if the first authentication parameter corresponding to the IMSI cannot be found, the authentication control module or the authentication parameter module sends a failure response to the service processing module, and then the service processing module triggers a GBA process; if the method of storing authentication parameters according to an IMSI of an SIM card is used, the number of times of triggering the GBA process by the service processing module can be reduced when the user uses multiple SIM cards alternately; in addition, a storage threshold can further be set in the authentication control module and the authentication parameter module, when the number of stored SIM cards exceeds the storage threshold, the seldom-used authentication parameters to which SIM cards correspond are deleted, and when storing the authentication parameters, timestamps can be inserted and used in the authentication parameters, so as to determine which authentication parameters are the authentication parameters which have not been used for a long time.

Step 306: the authentication control module sends, through the service processing module, the authentication parameters and an authentication parameter combination generated according to the authentication parameters to the MBBMS service platform, and the MBBMS service platform authenticates mobile TV business using the authentication parameters;

specifically, the authentication control module generates the authentication parameter combination by using a nonreversible Message Digest 5 (MD5) encryption algorithm according to the first authentication parameter, the second authentication parameter and the third authentication parameter, and sends the first authentication parameter, the second authentication parameter and the third authentication parameter and the authentication parameter combination which pass the verification to the service processing module; the service processing module sends the received authentication parameters and the authentication parameter combination to the MBBMS service platform; and the MBBMS service platform compares the received authentication parameters and the authentication parameter combination with authentication parameters pre-stored by the MBBMS service platform itself and an authentication parameter combination generated by the MBBMS service platform itself, respectively;

wherein the first authentication parameter pre-stored by the MBBMS service platform is sent by the terminal in Step 301, and the second authentication parameter pre-stored by the MBBMS service platform is the second authentication parameter locally generated by the MBBMS service platform according to the shared key and by using an algorithm which is used by the user verification module when generating the second authentication parameter, wherein the used algorithm is regulated by negotiation between the terminal and the MBBMS service platform in the GBA process; the authentication parameter combination generated by the MBBMS service platform itself is an authentication parameter combination generated by the MBBMS service platform by using the nonreversible MD5 encryption algorithm according to the authentication parameters stored by the MBBMS service platform itself; and the MBBMS service platform sends the authentication result to the service processing module of the terminal by using a message, and the authentication result is displayed by the screen of the terminal.

Step 307: the authentication control module sends a failure response to the service processing module, and then the service processing module stops an authentication process of mobile TV business;

specifically, the authentication control module sends the failure response to the service processing module; after receiving the failure response, the service processing module determines that hardware or software in the terminal goes wrong, which causes the situation that the authentication parameters are inconsistent, and then the service processing module forcibly stops the current authentication process of the mobile TV business, and triggers the GBA process.

The above are only the preferred embodiments of the disclosure and are not intended to limit the scope of protection of the disclosure; and any modification, equivalent replacement, improvement and the like shall fall within the scope of protection of the disclosure.

## Claims

1. A terminal, comprising: a user verification module, an authentication control module, an authentication parameter module and a service processing module, wherein
the user verification module is configured to generate a second authentication parameter;
the authentication control module is configured to generate a first authentication parameter, acquire the second authentication parameter from the user verification module, locally store and send the first authentication parameter, the second authentication parameter and a third authentication parameter acquired by the service processing module to the authentication parameter module, and when receiving an authentication parameter acquisition request from the service processing module, perform verification on the authentication parameters;
the authentication parameter module is configured to back up the first authentication parameter, the second authentication parameter and the third authentication parameter; and
the service processing module is configured to acquire the third authentication parameter, and send the authentication parameter acquisition request to the authentication control module.

2. The terminal according to claim 1, wherein
the authentication control module is further configured to, when all of the authentication parameters pass the verification, send, through the service processing module, the authentication parameters and an authentication parameter combination generated according to the authentication parameters to a Mobile Broadcast Business Management System (MBBMS) service platform.

3. The terminal according to claim 1 or 2, wherein
the authentication control module is further configured to, when an authentication parameter does not pass the verification, send a failure response to the service processing module; and
the service processing module is further configured to, when receiving the failure response from the authentication control module, stop an authentication process of mobile TV business.

4. A method for managing authentication parameters, comprising:
generating, by an authentication control module, a first authentication parameter, locally storing and sending the first authentication parameter to an authentication parameter module to back up; acquiring, by an authentication control module, a second authentication parameter from a user verification module, locally storing and sending the second authentication parameter to the authentication parameter module to back up; storing, by the authentication control module, a third authentication parameter acquired by a service processing module; and backing up, by the authentication parameter module, the third authentication parameter; and
when receiving an authentication parameter acquisition request from the service processing module, performing verification, by the authentication control module, on the authentication parameters.

5. The method according to claim 4, further comprising: before storing, by the authentication control module, the third authentication parameter acquired by the service processing module, and backing up, by the authentication parameter module, the third authentication parameter,
acquiring, by the service processing module, the third authentication parameter from a Mobile Broadcast Business Management System (MBBMS) service platform.

6. The method according to claim 4, further comprising:
when all of the authentication parameters pass the verification, sending, by the authentication control module, the authentication parameters and an authentication parameter combination generated according to the authentication parameters to the MBBMS service platform through the service processing module, and authenticating, by the MBBMS service platform, mobile TV business by using the authentication parameters.

7. The method according to claim 4 or 6, further comprising:
when an authentication parameter does not pass the verification, sending, by the authentication control module, a failure response to the service processing module; and stopping, by the service processing module, an authentication process of mobile TV business.

8. The method according to any one of claims 4 to 6, wherein the performing verification, by the authentication control module, on the authentication parameters comprises:
sending, by the service processing module, the authentication parameter acquisition request to the authentication control module; sending, by the authentication control module, an request for acquiring the first authentication parameter to the authentication parameter module; sending, by the authentication parameter module, the first authentication parameter to the authentication control module; and acquiring, by the authentication control module, the first authentication parameter, the second authentication parameter and the third authentication parameter in sequence from the authentication parameter module, and verifying the authentication parameters.

9. The method according to claim 6, wherein the sending, by the authentication control module, the authentication parameters and an authentication parameter combination generated according to the authentication parameters to the MBBMS service platform through the service processing module comprises:
generating, by the authentication control module, the authentication parameter combination by using an encryption algorithm according to the first authentication parameter, the second authentication parameter and the third authentication parameter; and sending, by the authentication control module, the first authentication parameter, the second authentication parameter, the third authentication parameter and the authentication parameter combination which pass the verification to the MBBMS service platform through the service processing module.

10. The method according to claim 6, wherein the authenticating, by the MBBMS service platform, mobile TV business by using the authentication parameters comprises:
comparing, by the MBBMS service platform, the received authentication parameters and the authentication parameter combination with authentication parameters pre-stored by the MBBMS service platform and an authentication parameter combination generated by the MBBMS service platform, respectively; sending, by the MBBMS service platform, an authentication result to the service processing module of a terminal by using a message; and displaying, by a screen of the terminal, the authentication result.
